Europäisches Patentamt

European Patent Office

Office européen des brevets

(19)

(11) Numéro de publication: **0 330 576**
**A1**

## (12) DEMANDE DE BREVET EUROPEEN

(21) Numéro de dépôt: **89400511.5**

(22) Date de dépôt: **23.02.89**

(51) Int. Cl.⁴: **A 23 B 7/02**

(30) Priorité: **25.02.88 FR 8802308**

(43) Date de publication de la demande:
**30.08.89 Bulletin 89/35**

(84) Etats contractants désignés: **DE ES IT NL**

(71) Demandeur: **Moreau, Jacques**
**2 et 3, Place Pierre Desfossés Les Ajoncs**
**F-44120 Vertou (FR)**

(72) Inventeur: **Moreau, Jacques**
**2 et 3, Place Pierre Desfossés Les Ajoncs**
**F-44120 Vertou (FR)**

(74) Mandataire: **Dawidowicz, Armand Conseil en Brevets**
**30 Boulevard du Château**
**F-92200 Neuilly sur Seine (FR)**

(54) Procédé de préparation de fruits déshydratés.

(57) La présente invention concerne un procédé de préparation de fruits déshydratés dans lequel les fruits découpés en morceaux dont l'épaisseur minimale est inférieure à 20 millimètres sont soumis à un séchage dans un courant d'air chaud.

Conformément à ce procédé dans un premier stade on traite superficiellement les morceaux avec un flux de gaz à une température comprise entre 100 et 120°C puis maintient le flux de gaz chaud en contact d'échange thermique avec les morceaux de fruits jusqu'à ce que la températue interne de ceux-ci se situe entre 50 et 60°C puis dans un deuxième stade, on poursuit le séchage avec un courant de gaz de séchage à des températures décroissantes comprises entre 85 et 40°C jusqu'à obtention d'une siccité du fruit comprise entre 3 et 10%.

Application notamment à la production de morceaux de pomme déshydratés.

Bundesdruckerei Berlin

EP 0 330 576 A1

## Description

## Procédé de préparation de fruits déshydratés.

La présente invention concerne la préparation de fruits déshydratés à partir plus particulièrement de fruits de la famille des rosacées tels que les pommes, les poires ou similaires.

Les procédés de production de fruits déshydratés de ce genre actuellement les plus utilisés consistent, après avoir pelé et coupé en morceaux les fruits qui ont été soumis à un jet de $SO_2$ pour les blanchir, à les tremper dans un jus sucré puis à les soumettre à un séchage dans un courant d'air à température constante. Ces procédés donnent en général un produit présentant une siccité comprise entre 20 et 30%. Les morceaux de fruits ont un aspect cotonneux et présentent une teinte peu colorée avec un manque de sa pidité.

Dans FR-A-1.338.351 on a décrit un procédé de préparation de tranches de pommes déshydratées dans lequel les tranches d'environ 6 millimètres d'épaisseur sont déshydratées dans un courant d'air chaud pour ramener leur teneur en humidité à une valeur comprise entre 16 et 30% en poids. Les tranches de pommes déshydratées obtenues par ce procédé présentent une teinte peu colorée et un manque de sapidité dû à l'extraction pendant le séchage de nombreux esters et sucs donnant au fruit son goût caractéristique. Les tranches obtenues ne peuvent, en raison de la texture du produit et du peu de sapidité, être consommées en l'état et elles doivent être réhydratées avant emploi en patisserie.

La présente invention a donc pour but de proposer un nouveau procédé de préparation de fruits déshydratés qui permette d'obtenir des morceaux de fruits déshydratés croquants présentant une accentuation du goût naturel.

La présente invention a aussi pour but de proposer un nouveau procédé de préparation de fruits déshydratés présentant de bonnes caractéristiques diététiques.

La présente invention a en conséquence pour objet un procédé de préparation de morceaux de fruits déshydratés dans lequel les fruits découpés en morceaux dont l'épaisseur minimale est inférieure à 20 millimètres, sont soumis à un séchage dans un courant d'air chaud, caractérisé par le fait que, dans un premier stade on traite superficiellement les morceaux avec un flux de gaz à une température comprise entre 100 et 120°C puis maintient le flux de gaz chaud en contact d'échange thermique avec les morceaux de fruits jusqu'à ce que la température interne de ceux-ci se situe entre 50 et 60°C puis dans un deuxième stade, on poursuit le séchage avec un courant de gaz de séchage à des températures décroissantes comprises entre 85 et 40°C jusqu'à obtention d'une siccité du fruit comprise entre 3 et 10%.

En séchant, au cours du premier stade, les morceaux de fruits à température élevée, on favorise une évacuation rapide de l'eau libre ce qui présente un certain nombre d'avantages. On obtient ainsi une coloration légèrement brun-dorée de la surface des morceaux et, d'autre part, on évite la perte de certains constituants volatils du fruit, ce qui permet d'améliorer le goût et les qualités gustatives des morceaux de fruits séchés obtenus en réalisant une concentration du goût naturel.

Le maintien dans le flux d'air chaud à 100-120°C est limité à la durée nécessaire à l'obtention d'une température des morceaux de fruits comprise entre 50 et 60°C. En effet, si ce type de séchage à haute température est poursuivi plus longtemps, on risque de désagréger les morceaux de fruits.

Selon une caractéristique supplémentaire de la présente invention, et si nécessaire pour améliorer le croustillant des morceaux de fruits, lorsqu'une teneur en eau des morceaux de fruits comprise entre 3 et 10% est obtenue, l'hygrométrie du gaz de séchage peut être abaissée fortement dans les dernières phases du séchage pour réaliser le colmatage des cellules superficielles.

Pour obtenir une qualité homogène parmi les morceaux de fruits séchés, les fruits sont découpés en morceaux réguliers de faible épaisseur. Ceci permet d'améliorer le croustillant.

Selon une autre caractéristique de l'invention et pour éviter l'agglomération des morceaux de fruits pendant le séchage, ceux-ci sont soumis périodiquement à un brassage.

D'autres caractéristiques et avantages de la présente invention apparaîtront à la lecture de la description faite ci-après des différentes étapes du procédé de fabrication de pommes déshydratées conforme à l'invention.

Le procédé de la présente invention sera mis en oeuvre de préférence avec des pommes saines, de bonne qualité gustative présentant un indice Thiaut (sucre plus 10 fois l'acide) compris entre 160 et 240. Ceci permet d'obtenir des morceaux de pommes déshydratées présentant les meilleures qualités.

Dans un premier temps, les pommes sont pelées et débarrassées de leur trognon. Il est évident pour l'homme de l'art que le procédé de la présente invention peut aussi être mis en oeuvre avec des pommes non pelées. Ensuite les fruits sont découpés en morceaux. Les morceaux peuvent être sous forme de cubes, de lamelles ou de plaquettes. Dans ces différents cas, les cubes présentent en règle générale un côté de 10 ou 15 millimètres, les lamelles ont de préférence une largeur allant de 7 à 20 millimètres pour une épaisseur égale à 0,2 ou 0,3 millimètre et une longueur égale à la plus grande dimension de la section du fruit et les plaquettes des dimensions du même ordre, par exemple de 15x10x8 millimètres. Pour obtenir de bons résultats, il est préférable que les fruits soient découpés en morceaux réguliers de faible épaisseur. Ceci permet de contrôler la teneur en eau des fruits et donc d'améliorer le croustillant des morceaux de fruits déshydratés.

Après coupage, les morceaux de fruits peuvent être éventuellement soumis à un traitement anti-oxydation de manière connue pour éviter leur décoloration. Selon un mode de réalisation préférentiel de la présente invention, les morceaux de fruits sont chargés en couche mince par charges de 8 à 10 kg sur des clayettes en acier inoxydable et ces clayettes sont empilées, avec un interstice de circulation de l'air, dans des chariots. Ces chariots sont introduits par quatre dans un four tunnel parcouru par de l'air atmosphérique réchauffé. Dans un premier stade, l'air de séchage est chauffé à une température élevée comprise entre 100° et 120°C, en général 110°C.

Pour obtenir un séchage homogène des morceaux de fruits, l'air chaud est ventilé à l'intérieur du tunnel. D'autre part, on modifie périodiquement la place des clayettes à l'intérieur du tunnel. De plus pour éviter que les morceaux de fruits ne s'amalgament les uns avec les autres, on effectue périodiquement un brassage des morceaux de fruits sur les clayettes. Le séchage à température éle vée est poursuivi jusqu'à ce que les morceaux de fruits présentent une température interne comprise entre 50 et 60°C, ce qui nécessite une durée variable en fonction de l'hygrométrie de l'air atmosphérique, durée qui est en général d'environ deux heures et demie. Ceci permet d'obtenir un aspect croustillant sans brunissage des morceaux de fruits.

Lorsque les morceaux de fruits ont atteint la température de 50 à 60°C, on poursuit le séchage à des températures décroissantes jusqu'à ce qu'on obtienne une teneur en humidité de l'air du tunnel comprise entre 6 et 25%, ce qui donne une teneur en humidité des morceaux de fruits comprise entre 3 et 10%. Cette phase du séchage demande en général une durée de quatre heures à quatre heures et demie.

On obtient, en fin de séchage, des morceaux de pomme croquants. Ceci est dû au fait que le séchage à température élevée des fruits coupés au cours du stade initial entraîne un départ rapide de l'eau libre sans atteindre la rupture de l'osmose de manière à aller en siccité le plus loin possible au coeur du fruit.

D'autre part, en fin de procédé, on a réalisé le colmatage des cellules superficielles qui évite en plus la perte de certains éléments des fruits tels que sels minéraux, sucre, pectine ou autres.

Si nécessaire, pour obtenir un meilleur croquant de surface, à la fin du séchage, l'hygrométrie de l'air de séchage peut être abaissé pendant quelques minutes. Ceci a pour effet d'augmenter le croustillant.

Les morceaux de fruits séchés ainsi obtenus sont ensuite traités de manière connue. Ils peuvent être stockés en vrac. De préférence ils seront mis en sachet immédiatement à la sortie du tunnel, soit seuls, soit en mélange éventuel avec d'autres fruits ou ingrédients. Pour permettre une conservation des morceaux de fruits séchés, les sachets seront éventuellement soumis à une pasteurisation à une température comprise entre 60 et 75°C. Eventuellement les morceaux de pommes séchés pourront être comprimés sous forme de plaque ou de barre.

La présente invention a été décrite en se référant à des morceaux de pommes. Toutefois il est évident pour l'homme de l'art que la présente invention peut s'appliquer à d'autres fruits tels que des poires, des pêches, des bananes, etc.

## Revendications

1. Procédé de préparation de morceaux de fruits déshydratés dans lequel les fruits découpés en morceaux dont l'épaisseur minimale est inférieure à 20 millimètres, sont soumis à un séchage dans un courant d'air chaud, caractérisé par le fait que, dans un premier stade on traite superficiellement les morceaux avec un flux de gaz à une température comprise entre 100 et 120°C puis maintient le flux de gaz chaud en contact d'échange thermique avec les morceaux de fruits jusqu'à ce que la température interne de ceux-ci se situe entre 50 et 60°C puis dans un deuxième stade, on poursuit le séchage avec un courant de gaz de séchage à des températures décroissantes comprises entre 85 et 40°C jusqu'à obtention d'une siccité du fruit comprise entre 3 et 10%.

2. Procédé selon la revendication 1, caractérisé en ce que, lorsqu'une teneur en eau des morceaux de fruits comprise entre 3 et 10% est obtenue, l'hygrométrie du gaz de séchage est abaissée pendant quelques minutes pour augmenter le croustillant.

3. Procédé selon l'une quelconque des revendications 1 et 2, caractérisé en ce que les fruits sont découpés en morceaux réguliers de faibles épaisseurs.

4. Procédé selon l'une quelconque des revendications 1 à 3, caractérisé en ce qu'avant le découpage, les fruits sont soumis à un pelage.

5. Procédé selon l'une quelconque des revendications 1 à 4, caractérisé en ce que, pendant le séchage, les morceaux de fruits sont soumis périodiquement à un brassage.

6. Procédé selon l'une quelconque des revendications 1 à 5, caractérisé en ce que, avant séchage, les morceaux de fruits sont soumis à un traitement anti-oxydation.

7. Procédé selon l'une quelconque des revendications 1 à 6, caractérisé en ce qu'après le séchage, les morceaux de fruits sont ensachés.

8. Procédé selon la revendication 7, caractérisé en ce que les sachets sont soumis à une pasteurisation à une température comprise entre 60 et 75°C.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 547 376  (M.E. SILVER et al.) <br> * Exemples 1,2; revendication 1, figure 1 * <br>--- | 1,3,4,6 ,7 | A 23 B    7/02 |
| A | US-A-3 879 568  (N.N.R. LUH et al.) <br> * Revendication 1; exemples 1,2 * <br>--- | 1 | |
| X | US-A-3 973 047  (J.R. LINABERRY et al.) <br> * Exemple 1; colonne 2, ligne 56 - colonne 3, ligne 6; colonne 5, lignes 6-41; revendications 1,6 * <br>--- | 1-4 | |
| X,Y | GB-A-1 036 469  (R.A. SPENCER TEMPLETON) <br> * Page 2, lignes 47-64; revendication 1 * <br>--- | 1,3-8 | |
| Y | US-A-4 496 597  (B. REGES) <br> * Revendication 1; colonne 2, ligne 66 - colonne 3, ligne 14 * & FR-A-2 498 424 <br>--- | 1,7,8 | |
| A | US-A-4 374 153  (H.A. ANDONIAN et al.) <br>--- | | DOMAINES TECHNIQUES RECHERCHES (Int. Cl.4) |
| A | US-A-3 974 301  (N.N.R. LUH et al.) <br>--- | | A 23 B |
| A | DE-A-2 720 174  (F. WIENEKE) <br>--- | | |
| A | WO-A-8 706 799  (B. WINSTROM-OLSEN et al.) <br>----- | | |

Le présent rapport a été établi pour toutes les revendications

| Lieu de la recherche | Date d'achèvement de la recherche | Examinateur |
|---|---|---|
| LA HAYE | 13-04-1989 | GUYON R.H. |